# EUROPEAN PATENT APPLICATION

(11) **EP 4 633 168 A1**
(43) Date of publication of application: **15.10.2025**
(21) Application number: 24305554.8
(22) Date of filing: 08.04.2024
(51) Int. Cl.: H04N 19/70, H04N 21/81

(54) **LANGUAGE AND PURPOSE INFORMATION FOR TEXT COMMENTS IN A VIDEO BITSTREAM USING SUPPLEMENTAL ENHANCEMENT INFORMATION MESSAGE**

(71) Applicant: InterDigital CE Patent Holdings, SAS, 75017 Paris (FR)
(72) Inventor: URBAN, Fabrice, 35235 THORIGNE-FOUILLARD (FR); DE LAGRANGE, Philippe, 35830 BETTON (FR); DOYEN, Didier, 35510 CESSON-SEVIGNE (FR); SALMON-LEGAGNEUR, Charles, 35000 RENNES (FR)
(74) Representative: Interdigital

(57) **Abstract**

A method and device allow to embed textual data into a bitstream that comprises encoded video by packaging the textual data as a SEI message and inserting it into the bitstream. Additional data in the SEI message specifies the language or the purpose of the textual data. The SEI message may comprise a persistence information indicating whether the textual data applies to a single picture or for subsequent pictures.

## Description

### TECHNICAL FIELD

At least one of the present embodiments generally relates to a method and a device for embedding textual data and language or the purpose information into a video bitstream and retrieving textual data from a video bitstream, the textual data being embedded using supplemental enhancement information message.

### BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks for example using quad-tree partitioning. To reconstruct the video, the compressed data is decoded by inverse processes corresponding to the prediction, transform, quantization and entropy coding.

### SUMMARY

According to a first aspect of at least one embodiment, a method comprises obtaining encoded video data and textual data, packaging the textual data and additional data in a supplemental enhancement information message, inserting the supplemental enhancement information message into a bitstream comprising the encoded video data, and providing the bitstream.

According to a second aspect of at least one embodiment, a method comprises obtaining a bitstream comprising encoded video data and a supplemental enhancement information message comprising textual data and additional data, extracting the textual data from the supplemental enhancement information message, and providing the extracted textual data.

According to a third aspect of at least one embodiment, an apparatus comprises one or more processors configured to obtain encoded video data and textual data, package the textual data and additional data in a supplemental enhancement information message, insert the supplemental enhancement information message into a bitstream comprising the encoded video data, and provide the bitstream.

According to a fourth aspect of at least one embodiment, an apparatus comprises one or more processors configured to obtain a bitstream comprising encoded video data and a supplemental enhancement information message comprising textual data and additional data, extract the textual data from the supplemental enhancement information message, and provide the extracted textual data.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a computer program product including instructions for performing at least part of any of the methods described above.

### BRIEF SUMMARY OF THE DRAWINGS

Figure 1 illustrates a block diagram of an example of a system in which various aspects and embodiments are implemented.
Figure 2 describes an example of a context in which following embodiments can be implemented.
Figure 3 illustrates a block diagram of an example of video encoder.
Figure 4 illustrates a block diagram of an example of video decoder.
Figure 5 illustrates an example of partitioning undergone by an image of an original video sequence.
Figure 6 illustrates an example structure of a video bitstream comprising a text SEI message according to at least one embodiment.
Figure 7 illustrates examples of temporal overlapping of text SEI messages.
Figure 8A illustrates an example process for encoding a bitstream according to embodiments.
Figure 8B illustrates an example process for decoding a bitstream according to embodiments.

### DETAILED DESCRIPTION

Various embodiments relate to embedding textual data into a bitstream that comprises encoded video by packaging the textual data as a SEI message and inserting it into the bitstream.

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

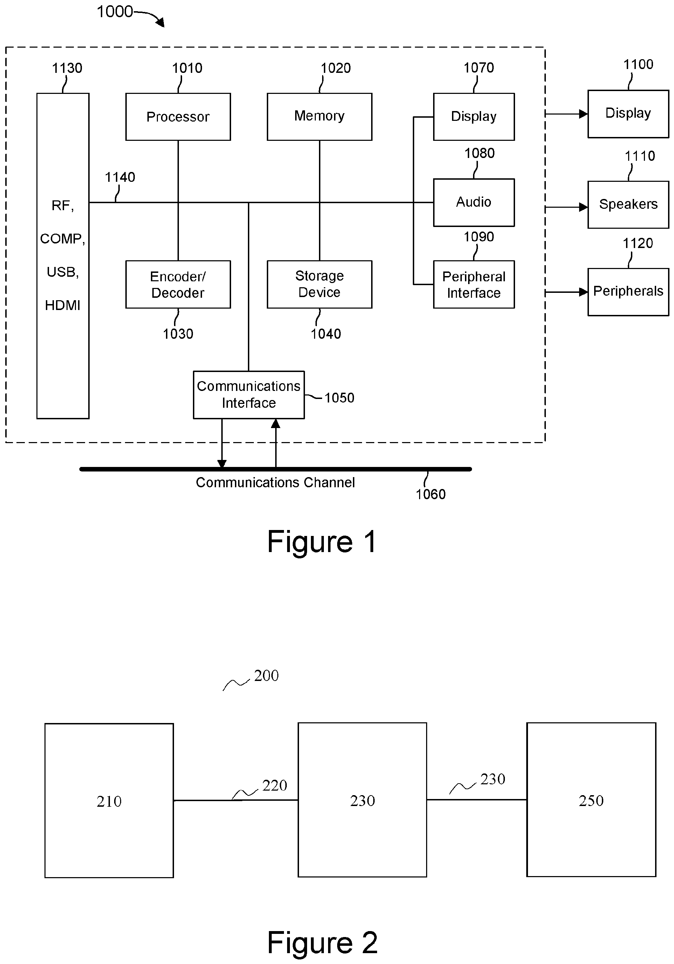

**Figure 1** illustrates a block diagram of an example of a system in which various aspects and embodiments are implemented. System 1000 can be embodied as a device or apparatus including the various components described below and is configured to perform one or more of the aspects described in this document. Examples of such devices include, but are not limited to, various electronic devices such as computers, smartphones, tablets, digital multimedia set top boxes, digital television receivers, personal video recording systems, connected home appliances, vehicle entertainment systems, vehicle control systems, drones, video surveillance cameras, and more generally data servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash-based memory, magnetic disk drive, solid-state drive (SSD), and/or optical disk drive. The storage device 1040 can include an internal storage device, an attached storage device (including detachable and non-detachable storage devices), and/or a network accessible storage device (a.k.a. cloud storage), as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions described further below. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform one or more of the aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265), or VVC (Versatile Video Coding, also known as H.266).

The input to the elements of system 1000 can be provided through various input devices as indicated in block 1130. Such input devices include, but are not limited to, a radio frequency (RF) portion that receives an RF signal transmitted, for example, over the air by a broadcaster, a Component (COMP) input terminal (or a set of COMP input terminals), a Universal Serial Bus (USB) input terminal, and/or a High-Definition Multimedia Interface (HDMI) input terminal. Other examples include composite video.

In various embodiments, the input devices of block 1130 have associated respective input processing elements as known in the art. For example, the RF portion can be associated with elements suitable for selecting a desired frequency (also referred to as selecting a signal, or band-limiting a signal to a band of frequencies), down converting the selected signal, band-limiting again to a narrower band of frequencies to select (for example) a signal frequency band which can be referred to as a channel in certain embodiments, demodulating the down converted and band-limited signal, performing error correction, and demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna. The RF portion may comply with standard specifications such as those published by Digital Video Broadcasting (DVB), Advanced Television Systems Committee (ATSC), Association of Radio Industries and Businesses (ARIB) or others.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Figure 2** describes an example of a context in which following embodiments can be implemented. In this context 200, a system 210 transmits a video stream to a system 230 using a communication channel 220. Examples of system 210 comprise a camera, a storage device, a computer, a drone, a video surveillance camera, a server or any device capable of delivering a video stream. The video stream is either encoded and transmitted by the system 210 or received and/or stored by the system 210 and then transmitted. The communication channel 220 is a wired (for example Internet, Ethernet, Cable network) or a wireless (for example WiFi, 3G, 4G or 5G, satellite TV, terrestrial TV) network link. The system 230 receives and decodes the video stream to generate a sequence of decoded pictures. An example of system 230 is a set top box. The obtained sequence of decoded pictures is then transmitted to a display system 250 using a communication channel 240, that could be a wired or wireless network as introduced above. The display system 250 then displays said pictures. An example of display system 250 is a television or display monitor.

In an embodiment, the system 230 and the display system 250 are comprised in a single device, thus combining the reception, decoding and display of the video stream. Examples of such device are a television, a computer, a tablet, a smartphone, a head-mounted display, a vehicle entertainment system, a medical device.

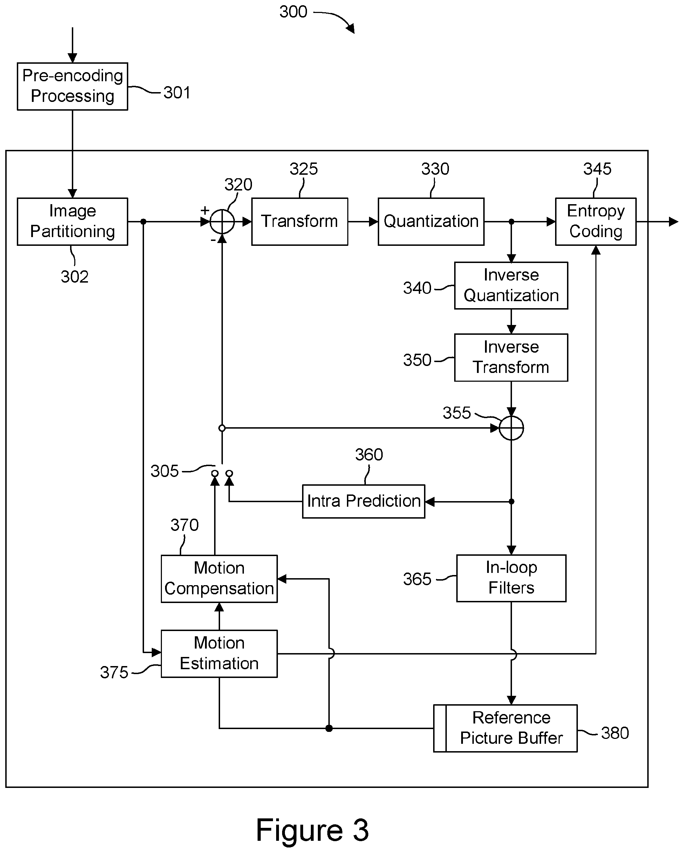

**Figure 3** illustrates a block diagram of an example of video encoder. Variations of this encoder 300 are contemplated, but the encoder 300 is described below for purposes of clarity without describing all expected variations. Before being encoded, the video sequence may go through pre-encoding processing 301, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream, for example in the form of supplemental enhancement information (SEI) messages, for the standards that include such mechanism.

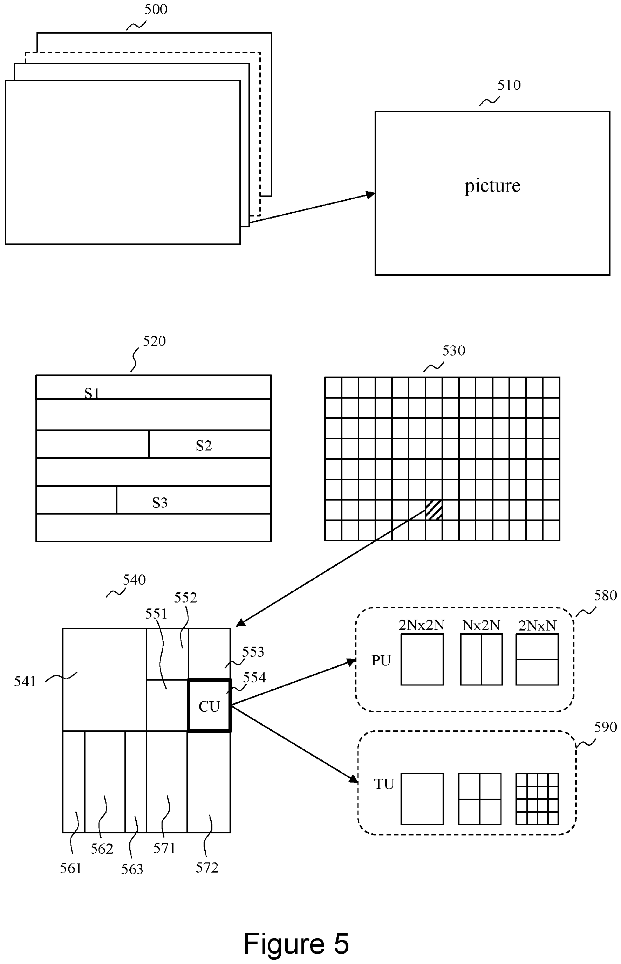

In the encoder, a picture is encoded by the encoder elements as described below. The picture to be encoded is partitioned (302), for example as further described in figure 5, and processed in units such as coding units. Each unit is encoded using, for example, either an intra or inter mode. When a unit is encoded in an intra mode, it performs intra prediction (360). In an inter mode, motion estimation (375) and compensation (370) are performed. The encoder decides (305) which one of the intra mode or inter mode to use for encoding the unit, and indicates the intra/inter decision by, for example, a prediction mode flag. Prediction residuals are calculated, for example, by subtracting (320) the predicted block from the original image block. The prediction residuals are then transformed (325) and quantized (330). The quantized transform coefficients, as well as motion vectors and other syntax elements, are entropy coded (345) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (340) and inverse transformed (350) to decode prediction residuals. Combining (355) the decoded prediction residuals and the predicted block, an image block is reconstructed. In-loop filters (365) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (380) for further use.

The encoder also generally performs video decoding as part of encoding video data.

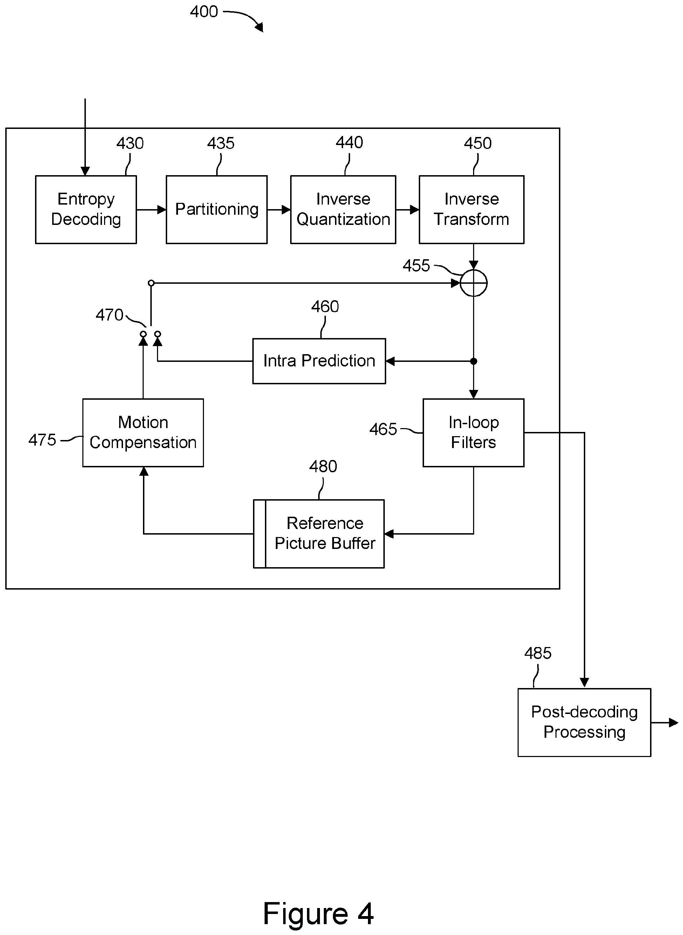

**Figure 4** illustrates a block diagram of an example of video decoder. In the decoder 400, a bitstream is decoded by the decoder elements as described below. Video decoder 400 generally performs a decoding pass reciprocal to the encoding pass as described in previous figure. The input of the decoder includes a video bitstream, which can be generated by video encoder 300 of figure 3. The bitstream is first entropy decoded (430) to obtain transform coefficients, motion vectors, and other coded information. The picture partition information indicates how the picture is partitioned. The decoder may therefore divide (435) the picture according to the decoded picture partitioning information. The transform coefficients are de-quantized (440) and inverse transformed (450) to decode the prediction residuals. Combining (455) the decoded prediction residuals and the predicted block, an image block is reconstructed. The predicted block can be obtained (470) from intra prediction (460) or motion-compensated prediction (i.e., inter prediction) (475). In-loop filters (465) are applied to the reconstructed image. The filtered image is stored at a reference picture buffer (480).

The decoded picture can further go through post-decoding processing (485), for example, an inverse color transform (e.g., conversion from YCbCr 4:2:0 to RGB 4:4:4) or an inverse remapping performing the inverse of the remapping process performed in the pre-encoding processing (301 of figure 3). The post-decoding processing can use metadata derived in the pre-encoding processing and signaled in the bitstream.

**Figure 5** illustrates an example of partitioning undergone by an image of an original video sequence. An original video sequence 500 comprises a plurality of pictures 510. A picture comprises a plurality of pixels, generally arranged in a grid comprising rows and columns. It is considered in this document that a pixel is composed of three components: a luminance component and two chrominance components. Other types of pixels are however possible comprising less or more components such as only a luminance component or an additional depth component or an additional transparency component.

A picture is divided into a plurality of coding entities. First, as represented by reference 530, a picture is divided in a grid of blocks called coding tree units (CTU). A CTU consists of a block of luminance samples together with two corresponding blocks of chrominance samples. The size of such block is generally N×N, and N is generally a power of two having a maximum value of "128" for example. Second, a picture is divided into one or more groups of CTU. For example, it can be divided into one or more tile rows and tile columns, a tile being a sequence of CTU covering a rectangular region of a picture. In some cases, a tile could be divided into one or more bricks, each of which consisting of at least one row of CTU within the tile. Above the concept of tiles and bricks, another encoding entity, called slice, exists, that can contain at least one tile of a picture or at least one brick of a tile. In the example represented by reference 520, the picture 21 is divided into three slices S1, S2 and S3 of the raster-scan slice mode, each comprising a plurality of tiles (not represented), each tile comprising only one brick.

As represented by reference 540, a CTU may be partitioned into the form of a hierarchical tree of one or more sub-blocks called coding units (CU). The CTU is the root (i.e., the parent node) of the hierarchical tree and can be partitioned in a plurality of CU (i.e., child nodes). Each CU becomes a leaf of the hierarchical tree if it is not further partitioned in smaller CU or becomes a parent node of smaller CU (i.e., child nodes) if it is further partitioned. During the coding of a picture, the partitioning is adaptive, each CTU being partitioned to optimize a compression efficiency.

For example, the CTU 540 is first partitioned in four square CU using a quadtree type partitioning. The upper left CU 541 is a leaf of the hierarchical tree since it is not further partitioned, i.e., it is not a parent node of any other CU. The upper right CU is further partitioned in four smaller square CU 551, 552, 553, 554 using again a quadtree type partitioning. The bottom left CU is vertically partitioned in three rectangular CU 561, 562, 563 using a ternary tree type partitioning. The bottom right CU is vertically partitioned in two rectangular CU 571, 572 using a binary tree type partitioning.

In HEVC appeared the concept of prediction unit (PU) and transform unit (TU). Indeed, in HEVC, the coding entity that is used for prediction (i.e., a PU) and transform (i.e., a TU) can be a subdivision of a CU. For example, as represented in the figure, a CU of size 2N×2N, can be divided in PU 580 of size N×2N or of size 2N×N. In addition, said CU can be divided in four TU 590 of size N×N or in "16" TU of size (N/2)×(N/2). Other video coding standards also use these notions. In VVC, except in some particular cases, frontiers of the TU and PU are aligned on the frontiers of the CU. Consequently, a CU comprises generally one TU and one PU.

In the present application, the terms "reconstructed" and "decoded" may be used interchangeably, the terms "pixel" and "sample" may be used interchangeably, the terms "image," "picture", "sub-picture", "slice" and "frame" may be used interchangeably. Usually, but not necessarily, the term "reconstructed" is used at the encoder side while "decoded" is used at the decoder side. In the present application, the term "block" or "picture block" can be used to refer to any one of a CTU, a CU, a PU and a TU. In addition, the term "block" or "picture block" can be used to refer to a macroblock, a partition and a sub-block as specified in H.264/AVC or in other video coding standards, and more generally to refer to an array of samples of numerous sizes.

A SEI message is a syntax structure that is defined in various MPEG standards to allow carriage of metadata. It is a specific type of NAL (Network Access Layer) unit, which is the elementary packet in MPEG bitstream formats. The SEI syntax may vary slightly across different standards, but it commonly contains at least a payload type, a payload length, and the payload itself. The SEI syntax defined for VVC is illustrated in Table 1 as an example.

**Table 1**

| | |
|---|---|
| sei_message( ) { | **Descriptor** |
| payloadType = 0 | |
| do { | |
| payload_type_byte | u(8) |
| payloadType += payload_type_byte | |
| } while( payload_type_byte = = 0xFF ) | |
| payloadSize = 0 | |
| do { | |
| payload_size_byte | u(8) |
| payloadSize += payload_size_byte | |
| } while( payload_size_byte = = 0xFF ) | |
| sei_payload( payloadType, payloadSize ) | |
| } | |

In addition, a specific syntax structure is typically defined for each payload type and instantiated by a sei_payload syntax structure according to each payload type.

Embodiments described hereafter have been designed with the foregoing in mind.

At least one embodiment proposes to define a specific SEI message to carry textual data, hereafter named a text SEI message. Such text SEI message is inserted into a video bitstream so that textual data related to a video content is carried within the video content itself. Text SEI message may be used for various applications. One example relates to the video production context and comprises adding comments or annotations for parts of a video sequences. In such example, the textual data could comprise production information such as the shooting date, the scene number, the name of the camera operator or technical data such as the frame rate or resolution. Another example relates to indexing purposes, where the textual data may be used for adding descriptive annotations, or keywords. This may improve the usage of content in a large collection of video sequences, where different portions of the sequences may be of specific interest. Other examples of usage for textual data comprise user generated comments or descriptions, for example in user generated content, comments or links related to products showcased in the video sequence, copyright information, etc.

Another example relates to a player of a video sequence that would list available comments, and offer to play the relevant portion of the video. For example, when a comment indicates "my preferred sequence" or other wording indicating that a sequence is a preferred sequence, the video sequence comprising this comment could be played back directly.

The display of these textual data may be handled by a device that plays back video convent. When a video sequence comprising a text SEI message is played back by a player device, the textual data may be displayed in a specific area of the screen. In a multi-window display application such as a computer device, the textual data may be displayed in a separate window from the window that shows the video content.

Such embodiment may be applied in the context of AVC, HEVC and VVC/VSEI or other video codecs. In at least one embodiment, a new SEI message type is created to embed textual data. A new payloadType identifier value is defined for the text SEI message. Specific payloadType values may be selected to identify a text SEI message. Values between 60and 100 may be used, for example 60 or 61. The sei_payload syntax structure is extended to accommodate for this new value and interpret the payload as a newly defined "text_comment" syntax.

In at least one embodiment, the syntax for the "text_comment" is defined as illustrated in Table 2.

**Table 2**

| | |
|---|---|
| text_comment( payloadSize ) { | **Descriptor** |
| **text_comment_cancel_flag** | u(1) |
| if( !text_comment_cancel_flag ) { | |
| **text_comment_id** | u(16) |
| **text_comment_id_cancel_flag** | u(1) |
| if ( !text_comment_id_cancel_flag) { | |
| **text_comment_id_persistence_flag** | u(1) |
| while! !byte_aligned( ) ) | |
| **text_comment_alignment_zero_bit** | u(1) |
| for( i = 0; more_data_in_payload( ); i++ ) | |
| **text**_**comment**[text_comment_idx][i] | b(8) |
| } | |
| } | |
| } | |

Semantics for the elements of Table are the following:
**text_comment_cancel_flag** equal to 1 indicates that the SEI message cancels the persistence of any previous text comment SEI message that is associated with one or more layers to which the text comment SEI message applies. text_comment_cancel_flag equal to 0 indicates that text comment information follows.
**text_comment_id** indicates the identifier of the text comment. The value of text_comment_id shall be in the range of 0 to 255, inclusive. In at least one embodiment, specific values are reserved for specific type of information. For example, value '0' may be reserved for copyright information. In another embodiment, a range of values is reserved for specific types of information. For example, values '0' to '9' may be reserved for specific types of information, '0' may be reserved for copyright information, '1' may be reserved for parameters of the content, '2' may be reserved for the name of the author, etc.
**text_comment_id_cancel_flag** equal to 1 cancels the persistence scope of the text_comment_id-th text comment. text_comment_id_cancel_flag equal to 0 indicates that text comment follows.
**text_comment_id_persistence_flag** specifies the persistence of the text_comment_id-th text comment for the current layer: **text_comment_id_persistence_flag** equal to 0 specifies that the text comment applies to the current decoded picture only. **text_comment_id_persistence_flag** equal to 1 specifies that the text comment applies to the current decoded picture and persists for all subsequent pictures of the current layer in output order until one or more of the following conditions are true: a new CLVS of the current layer begins, or the bitstream ends, or a picture in the current layer, associated with a text comment SEI message with the same text_comment_id value, is output that follows the current picture in output order.
**text_comment_alignment_zero_bit** shall be equal to 0. This element is stuffing for byte alignment purposes.
**text_comment[text_comment_id][i]** contains the i-th byte of the text comment.

In at least one embodiment, the persistence time is specified in terms of a number of POC instead of a flag, especially for consistency with other SEI messages in the context of AVC. In that case, text_comment_id_persistence_flag would be replaced by text_comment_id_repetition_period: value 0 meaning no persistence, value 1 meaning persistence until cancel (as with the flag), and values greater than 1 would indicate the number of POCs during which the message is valid.

In at least one embodiment illustrated in the syntax of Table 3, a reserved identifier value 0 allows to cancel all previous text SEI messages. In other words, when text_comment_id is zero, all previous text SEI messages are cancelled regardless of their text_comment_id value.

**Table 3**

| | |
|---|---|
| text_comment( payloadSize ) { | **Descriptor** |
| **text_comment_id** | u(16) |
| if( text_comment_id != 0 ) { | |
| **text_comment_id_cancel**_**flag** | u(1) |
| if( !text_commentid_cancel_flag) { | |
| **text_comment_id_persistence_flag** | u(1) |
| while( !byte_aligned( ) ) | |
| **text_comment_alignment_zero_bit** | u(1) |
| for( i = 0; more_data_in payload( ); i++ ) | |
| **text_comment**[text_comment_id][i] | b(8) |
| } | |
| } | |
| } | |

In a variant embodiment, persistence is signaled as a list of identifiers to be cancelled. In a variant embodiment, a reserved identifier value indicates to cancel all identifiers.

In case where text comments are in conflict, for example due to the persistence, the one with the smallest text_comment_id is to be considered. The importance of the text comments is in inverse order of their text_comment_id.

In at least one embodiment illustrated in Table 4, an additional syntax element related to language information is added to the text comment SEI. This language information allows to specify the language used for signaling the comment. Several applications can be foreseen, such as for example automatic translation, or selecting a comment with appropriate language field among multiple versions of a same comment.

**Table 4**

| | |
|---|---|
| text_comment( payloadSize ) { | **Descriptor** |
| **text_comment_cancel_flag** | u(1) |
| if( !text comment cancel flag ) 1 | |
| **text_comment_id** | u(16) |
| **text_comment_id_cancel_flag** | u(1) |
| if ( !text_comment_id_cancel_flag) { | |
| **text_comment_id**_**persistence_flag** | u(1) |
| **text_comment_language_flag** | u(1) |
| if ( text_comment_language_flag) 1 | |
| **text_comment**_**language** | b(8) |
| } | |
| while( !byte_aligned( ) ) | |
| **text_comment_alignment_zero_bit** | u(1) |
| for( i = 0; more_data_in_payload( ); i++ ) | |
| **text_comment**[text_comment idx][i] | b(8) |
| } | |
| } | |
| } | |

In the example syntax of Table 4, the language information is enabled by a text_comment_language_flag. When this flag is equal to 1, it specifies that the text_comment_language is signaled and the text_comment_language syntax element is inserted. In at least one embodiment, the text_comment_language_flag syntax element is not signaled and inferred to 1. In other words, the text_comment_language syntax element is always present in the syntax.

The text_comment_language syntax element specifies the language of the forthcoming text comment. In at least one embodiment, this field is signaled in clear text (e.g. a byte string). In at least one embodiment, this field is using the two-letter ISO 639-1 standard format. In at least one embodiment, this field is using the three-letter ISO 639-2 standard format.

If text_comment_language is not present, or if it is a special value such as empty string, or ID 0, it is inferred as "undefined value".

In at least one embodiment, multiple languages may be supported by a text message, using the same text_comment_id for multiple text messages having different text_comment_language value. In other words, text comment SEIs referring to the same Picture Unit (i.e., for the same picture) having the same text_comment_id must have a different text_comment_language value. The receiver device (or display device) selects the appropriate text comment to display amongst the multiple text messages. The selection may be done using a selection in a user interface or a configuration parameter of the device.

In at least one embodiment, the text_comment_id is not required to be strictly the same but should have the same value modulo a number. For example, n=8 least significant bits of the text_comment_id may be used to specify the language (with 8 bits, giving 255 possible values including the "undefined" value), and the remaining most significant bits identify the message. Thus, text messages having the same most significant bits refer to the same message supporting different languages. Note that in this embodiment, the language can be directly identified by the n least significant bits of the text_comment_id and that the text_comment_language value is not signaled as previously but inferred from the least significant bits of the text_comment_id.

For example, message SEIs with text_comment_id 25 and 112 refer to the same message with ID 0 in languages identified by 25 and 112; message SEIs with text_comment_id 281 (=256+25) and 368 (=256+112) refer to another message with ID 1 with languages identified again by 25 and 112.

In at least one embodiment illustrated in Table 5, an additional syntax element related to a purpose information is added to the text comment SEI. This language information allows to specify a purpose (i.e., a meaning) for the text comment. This may impact how the text comment is processed and how it is presented to the user. For example, if the purpose of the text comment is a copyright, then it may not be displayed the same manner as if the purpose is indexing. The receiver device (or display device) selects the appropriate presentation for the text comment to display based on the purpose.

**Table 5**

| | |
|---|---|
| text_comment( payloadSize ) { | **Descriptor** |
| **text_comment_cancel**_**flag** | u(1) |
| if( !text_comment_cancel_flag ) { | |
| **text**_**comment_id** | u(16) |
| **text_comment_id_cancel**_**flag** | u(1) |
| if ( !text_comment_id_cancel_flag) 1 | |
| **text_comment_id_persistence_flag** | u(1) |
| **text_comment_purpose_flag** | u(1) |
| if ( text_comment_purpose_flag) { | |
| **text_comment_purpose_id** | b(8) |
| **}** | |
| while( !byte_aligned( ) ) | |
| **text_comment_alignment_zero_bit** | u(1) |
| for( i = 0; more_data_in_payload( ); i++ ) | |
| **text**_**comment**[text_comment-idx][i] | b(8) |
| } | |
| } | |
| } | |

In the example syntax of Table 5, the language information is enabled by a text_comment_purpose_flag. When this flag is equal to 1, it specifies that the text comment purpose is signaled and the text_comment_purpose syntax element is inserted. In at least one embodiment, the text_comment_ purpose _flag syntax element is not signaled and inferred to 1. In other words, the text_comment_ purpose syntax element is always present in the syntax.

The syntax element text_comment_purpose_id specifies the purpose of the forthcoming text comment. If text_comment_purpose_id is not present, or if it is a special value such as purpose ID 0, it is inferred as "undefined value". The table 6 lists some example of text_comment_purpose_id and the corresponding purposes.

**Table 6**

| ID | value | interpretation |
|---|---|---|
| 0 | Undefined purpose | Generic text message |
| 1 | Copyright | Copyright information, may define what is allowed to do with the video |
| 2 | Source (producer, library, everything about capture, post processing, archiving info that doesn't fit into EXIF / TIFF data) | Source information about the video, such information can be used in a video library |
| 3 | summary | Summary of the video |
| 4 | Change tracking | For editing videos, history of edits that have been made or new edits suggestions |
| 5 | Explicative information | Supplemental information that may be needed to understand the video, for example, with a teaching content |
| 6 | Indexing | Keywords, in plain text that may be used by a search engine for indexing videos |
| 7 | Meeting (participants, speaker, screen sharing source, date...) | Supplemental information for recorded meetings, giving information about live meeting conditions |
| 8 | Related links, info, products (advertising purpose) | additional meta data on a specific picture or shot, with plain text such as a name, resume of a film or news character, url of a product, etc. |
| 9 | Chaptering / narration highlights | Chaptering information, or shot name, event in a video, that may be used for navigating in a video. |
| 10..15 | reserved | For future use |

In at least one embodiment, multiple purpose can coexist and be combined, and be signaled. In this case the semantics is modified as follows. The text_comment_purpose_flag syntax element is changed text_comment_purpose_num and specifies the number of signaled purposes. If 0, it acts as text_comment_purpose_flag is false. In addition, the text_comment_purpose_id single syntax element is changed to a table for example identified as text_comment_purpose_ids[i] and comprising, for i in 0 to text_comment_purpose_num-1, the purposes to be signaled.

In at least one embodiment illustrated in table 7, an additional syntax element related to language information and an additional syntax element related to purpose information are both added to the text comment SEI. The corresponding syntax elements are the same as those described in Tables 4, 5 and 6. All the variations described in the context of these tables also apply for this embodiment.

**Table 7**

| | |
|---|---|
| text_comment( payloadSize ) { | **Descriptor** |
| **text_comment_cancel**_**flag** | u(1) |
| if( !text_comment_cancel_flag ) { | |
| **text_comment_id** | u(16) |
| **text_comment_id_cancel**_**flag** | u(1) |
| if ( !text_comment_id_cancel_flag ) { | |
| **text_comment_id_persistence_flag** | u(1) |
| **text_comment_language**_**flag** | u(1) |
| if ( text_comment_language_flag) { | |
| **text_comment_language** | b(8) |
| **}** | |
| **text_comment_purpose_flag** | u(1) |
| if (text_comment_purpose_flag) 1 | |
| **text_comment_purpose**_**id** | b(8) |
| } | |
| while( !byte_aligned( ) ) | |
| **text_comment_alignment_zero_bit** | u(1) |
| for( i = 0; more_data_in_payload( ); i++ ) | |
| **text_comment**[text_comment_idx][i] | b(8) |
| } | |
| } | |
| } | |

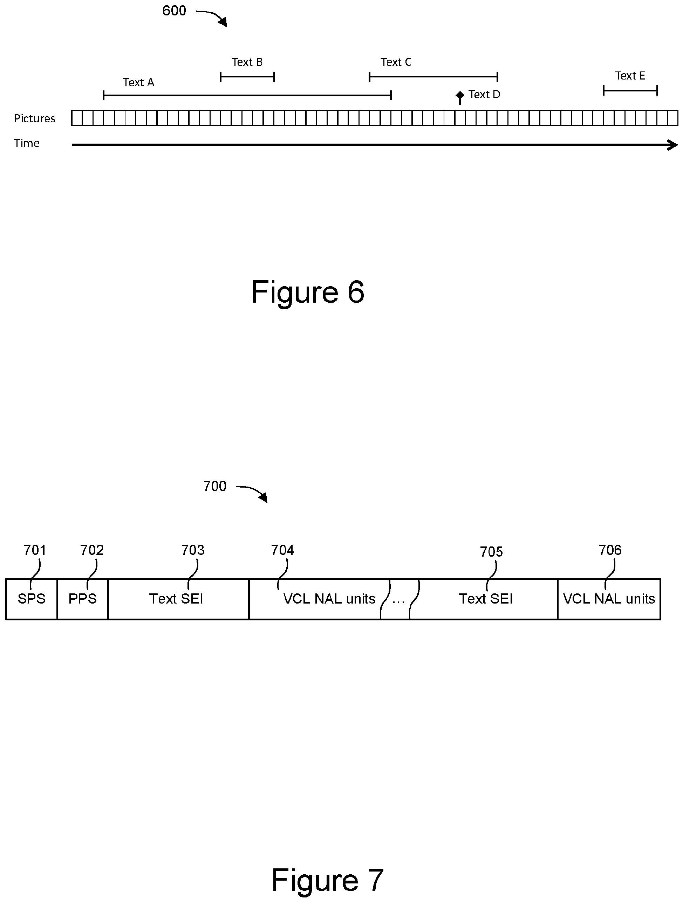

**Figure 6** illustrates an example of text SEI message overlapping according to at least one embodiment. The text SEI message may comprise some information related to persistence of a given textual data. This allows to control a validity time frame. The persistence may be controlled per identifier, allowing temporal overlapping between messages with different identifiers. The validity time frame of a text SEI message is defined by a starting point through a flag that indicates the textual data as being persistent (in other words, it is valid for the current frame and future frames) and by a stop point through a cancel flag that indicates where the information is no more valid, or when the video sequence ends, or when a new SEI message of the same type is received.

Typically, all messages of the same SEI payload type are cancelled by the cancel flag: that is the case here for text_comment_cancel_flag. But to allow temporal overlapping, in an embodiment allowing finer control per text comment id, the persistence flag is specific per id and an id-specific cancel flag (text_comment_id_cancel_flag) can be used to cancel the validity of previous text SEI message(s) with that specific id, while text SEI message(s) with other ids may stay valid.

This allows temporal overlapping of text SEI messages as illustrated in the figure 6: since persistence (starting with persistence flag and ending with cancel flag) is specified per id, text comments with different ids can co-exist independently. For example, when the element "Text B" is cancelled, the element "Text A", that was started prior to "text B", remains active. Cancelling the element "Text B" does not cancel all active elements.

**Figure 7** illustrates an example structure of a video bitstream comprising a text SEI message according to at least one embodiment. In this bitstream example 700, the text SEI is typically inserted before (703) the video data of a picture unit (704, 706). It may also be inserted before, after, or in the middle (705) of other parameter sets or other prefix information like SPS (701) and PPS (702).

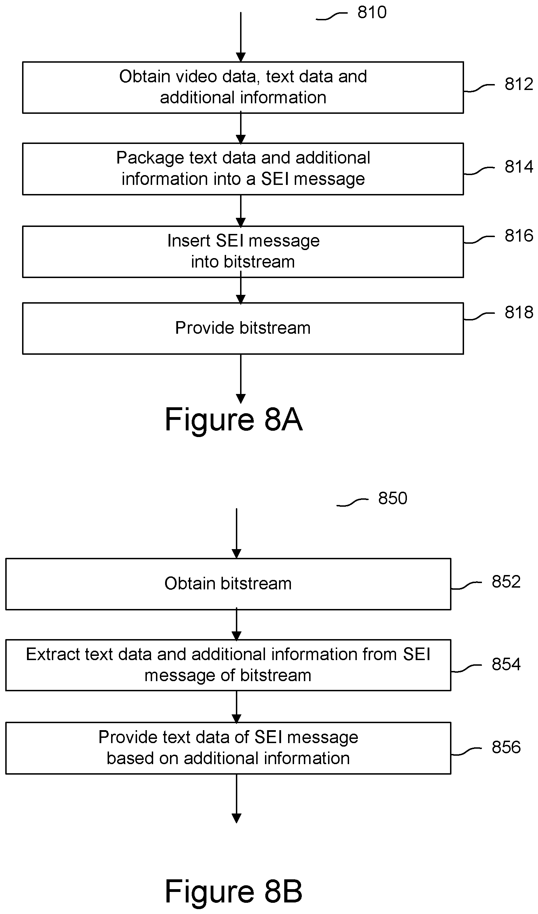

**Figure 8A** illustrates an example process for encoding a bitstream comprising a text SEI message according to embodiments. The process 810 is for example implemented by a processor 1010 of a device 1000 of figure 1, a system 210 of figure 2, or an encoder 300 of figure 3. In step 812, the processor obtains video data, text data and additional information. The video data is for example encoded in a bitstream and textual data is to be inserted into the video data. In step 814, the processor packages the textual data and the additional data into a text SEI message, for example based on the syntax of tables 1 to 7. As introduced in Table 2, the SEI message also comprises an identifier (**text_comment_id**) associated to the textual data. In step 816, processor inserts the SEI message into the bitstream comprising the encoded video data. In step 818, the processor provides the bitstream that comprises the encoded video data and the textual data packaged into an SEI message. The additional data is related to the language and/or to the purpose of the textual data and may be used to display the textual data accordingly.

**Figure 8B** illustrates an example process for decoding a bitstream comprising a text SEI message according to embodiments. The process 850 is for example implemented by a device 1000 of figure 1, a system 230 of figure 2, or a decoder 400 of figure 4. In step 852, the processor obtains the bitstream that comprises an encoded video data, a text SEI message and additional data, for example based on the syntax of tables 1 and 2. In step 854, the processor extracts the textual data and additional data comprised in the SEI message. In step 856, the processor provides the textual data extracted from the bitstream. As introduced in Table 2, the SEI message also comprises an identifier (**text_comment_id**) associated to the textual data. This identifier is for example used to handle the persistence of the textual data, as described above with reference to figure 6. The additional data is related to the language and/or to the purpose of the textual data and may be used to display the textual data accordingly.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures provide some embodiments, but other embodiments are contemplated, and the discussion of these figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the motion compensation and motion estimation modules of a video encoder 300 and decoder 400 as respectively shown in figures 3 and 4.

Various numeric values are used in the present application, for example, 128 for the block size. The specific values are for example purposes and the aspects described are not limited to these specific values.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, adapting the illumination compensation process.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "frame", "slice" and "tiles" may be used interchangeably. Usually, but not necessarily, the term "reconstructed" is used at the encoder side while "decoded" is used at the decoder side.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

## Claims

1. A method comprising:
- obtaining encoded video data and textual data;
- packaging the textual data in a supplemental enhancement information message;
- packaging additional data representative of language and/or purpose of the textual data in the supplemental enhancement information message;
- inserting the supplemental enhancement information message into a bitstream comprising the encoded video data; and
- providing the bitstream.

2. A method comprising:
- obtaining a bitstream comprising encoded video data and a supplemental enhancement information message comprising textual data and additional data representative of language and/or purpose of the textual data;
- extracting the textual data and the additional data representative of language or purpose of the textual data from the supplemental enhancement information message; and
- providing the extracted textual data based on the additional data representative of language or purpose.

3. The method of any of claim 1 or 2, wherein an identifier is associated to the textual data.

4. The method of any of claim 1 to 3, wherein the supplemental enhancement information message further comprises a persistence information indicating whether the textual data applies to a single picture or for subsequent pictures.

5. The method of claim 4, wherein the persistence information is associated with the identifier.

6. The method of any of claims 1 to 5, wherein the supplemental enhancement information message is compliant with ITU-T H.274.

7. An apparatus comprising one or more processor configured to:
- obtain encoded video data and textual data;
- package the textual data in a supplemental enhancement information message;
- package additional data representative of language and/or purpose of the textual data in the supplemental enhancement information message;
- insert the supplemental enhancement information message into a bitstream comprising the encoded video data; and
- provide the bitstream.

8. An apparatus comprising one or more processor configured to:
- obtain a bitstream comprising encoded video data and a supplemental enhancement information message comprising textual data and additional data representative of language and/or purpose of the textual data;
- extract the textual data and the additional data representative of language or purpose of the textual data from the supplemental enhancement information message; and
- provide the extracted textual data based on the additional data representative of language or purpose.

9. The apparatus of any of claim 7 or 8, wherein an identifier is associated to the textual data.

10. The apparatus of claim 7 to 9, wherein the supplemental enhancement information message further comprises a persistence information indicating whether the textual data applies to a single picture or for subsequent pictures.

11. The apparatus of claim 10, wherein the persistence information is associated with the identifier.

12. The apparatus of any of claims 7 to 11, wherein the supplemental enhancement information message is compliant with ITU-T H.274.

13. A non-transitory computer readable medium containing data content generated according to the method of any one of claims 1 to 6.

14. A computer program product comprising instructions for performing the method of any one of claims 1 to 6 when executed by one of more processor.
